# EUROPÄISCHE PATENTANMELDUNG

(11) **EP 1 695 752 A1**
(43) Veröffentlichungstag der Anmeldung: **30.08.2006**
(21) Anmeldenummer: 06002039.3
(22) Anmeldetag: 01.02.2006
(51) Int. Cl.: B01D 35/143, B01D 37/04, B01D 46/46, F02M 35/09

(54) **Vorrichtung zur Überwachung eins Filters sowie Verfahren zur Filterüberwachung**

(30) Priorität: 23.02.2005 DE 102005008602
(71) Anmelder: Behr GmbH & Co. KG, 70469 Stuttgart (DE)
(72) Erfinder: Boschert, Björn, Dipl.-Ing., 71254 Ditzingen (DE); Riedel, Rudolf, Dr., 75181 Pforzheim (DE)

(57) **Zusammenfassung**

Die Erfindung betrifft eine Vorrichtung (10) zur Überwachung eines Filters, die einen in einem Luftkanal (2) angeordneten Filter (3), insbesondere einen Partikelfilter (3') und/oder einen Aktivkohlefilter (3") überwacht, wobei die Vorrichtung (10) eine physikalische Überwachungseinheit (4) umfasst, welche die Strömungsgeschwindigkeit der Luft nach dem Filter (3) an mindestens zwei Messstellen (5) ermittelt, sowie ein Verfahren zur Überwachung eines Filters (3) mit einer solchen Vorrichtung (10).

## Beschreibung

Die Erfindung betrifft eine Vorrichtung zur Überwachung eines Filters, insbesondere eines Partikelfilters und/oder eines Aktivkohlefilters für ein Belüftungssystem eines Kraftfahrzeugs, gemäß dem Oberbegriff des Anspruchs 1.

Eine Filteranlage mit Filtereinbauüberwachung ist aus der EP 1 143 232 A1 bekannt. Hierbei wird der Filter mittels einer Differenzdruck-Messanordnung, weiche zur Erkennung eines fehlerhaften oder fehlerhaft eingebauten Filterelements in einem Leitungssystem dient, überwacht. Dabei ist das Filterelement dichtend zwischen die Rohseite und die Reinseite eingebracht. Auf der Rohseite ist eine erste Druckaufnahmeeinheit und auf der Reinseite ist eine zweite Druckaufnahmeeinheit angeordnet. Beide Druckaufnahmeeinheiten sind mit einer Auswertungseinheit verbunden. In der Auswertungseinheit wird der Differenzdruck zwischen der Rohseite und der Reinseite ermittelt und mit einem Mindest-Referenz-Druckwert verglichen. Sobald der ermittelte Differenzdruck geringer ist als der Mindest-Referenz-Druckwert, erfolgt eine Aktion der Auswertungseinheit.

Derartige Vorrichtungen zur Überwachung eines Filters, insbesondere dessen Beladezustands, lassen jedoch noch Wünsche offen.

Es ist Aufgabe der Erfindung, eine verbesserte Vorrichtung zur Überwachung eines Filters zur Verfügung zu stellen.

Diese Aufgabe wird gelöst durch eine Vorrichtung zur Überwachung eines Filters mit den Merkmalen des Anspruchs 1. Vorteilhafte Ausgestaltungen sind Gegenstand der Unteransprüche.

Erfindungsgemäß ist eine Vorrichtung zur Überwachung eines Filters vorgesehen, welche einen in einem Luftkanal, insbesondere einer Kraftfahrzeug-Klimaanlage, angeordneten Filter anhand der Strömungsgeschwindigkeit der Luft im Luftkanal nach dem Filter überwacht, um den Beladungszustand insbesondere eines Partikelfilters und/oder eines Aktivkohlefilters zu überwachen.

Wie sich aus Versuchen ergeben hat, wird der Filter in der Regel inhomogen beladen. In Bereichen mit einer höheren Strömungsgeschwindigkeit erfolgt die Beladung des Filters in einem stärkeren Maße, als in Bereichen mit geringerer Strömungsgeschwindigkeit.

Die Strömungsgeschwindigkeit der Luft nach dem Filter wird erfindungsgemäß an mindestens zwei Messstellen ermittelt. Vorteilhaft ist eine erste Messstelle an einer Stelle mit hoher Luftströmungsgeschwindigkeit nach dem Filter und/oder eine zweite Messstelle an einer Stelle mit geringer Luftströmungsgeschwindigkeit nach dem Filter angeordnet. Die Ermittlung der Positionen hoher und geringer Luftströmungsgeschwindigkeit erfolgt vorteilhafterweise durch empirische Untersuchungen mit einem Filter in unbeladenem Zustand.

Da die Beladung eines Partikelfilters in der Regel insbesondere von der Mitte her erfolgt, ist auch bei einem relativ stark beladenen Partikelfilter, der in der Mitte nahezu keine Luftdurchströmung mehr zulässt, außermittig die Luftströmung noch vorhanden, so dass die Differenz der Strömungsgeschwindigkeiten der Luft als Maß für den Beladungszustand herangezogen werden kann. Die Überwachung kann durch einfache Vergleichsmessungen der Strömungsgeschwindigkeiten an den unterschiedlichen Messstellen erfolgen.

Die Messstellen sind hierbei bevorzugt in gleichem Abstand zum Filter angeordnet. Im Bereich der Messstellen, insbesondere zwischen Filter und Messstellen oder direkt hinter den Messstellen, sollten keine Anordnungen sein, welche die Strömungsgeschwindigkeit der Luft beeinflussen und verfälschen können.

Neben der physikalischen Überwachungseinheit kann auch eine chemische Überwachungseinheit vorgesehen sein, so dass auch kombinierte Filter, insbesondere Partikelfilter mit nachgeschaltetem Aktivkohle-Filter, optimal überwacht werden können. Mittels dieser Elektronik wird bevorzugt die Vorgeschichte der Filterbeladung ausgewertet und in Relation zur aktuellen Pufferwirkung der Aktivkohle in einem Filter gesetzt.

Bevorzugt ist genau eine gemeinsame Auswerteelektronik für die physikalische Überwachungseinheit und die chemisch Überwachungseinheit zusammen vorgesehen. Hierbei kann es sich auch um eine intelligente, lemfähige Elektronik handeln.

Ein weiterer Gegenstand der Erfindung ist eine Belüftungs-, Heizungs- und/oder Klimaanlage für ein Kraftfahrzeug mit einer erfindungsgemäßen Vorrichtung zur Überwachung eines Filters.

Vorteilhafterweise umfasst die Selüftungs-, Heizungs- und/oder Klimaanlage zumindest eines der folgenden Bauteile: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden wird die Erfindung anhand eines Ausführungsbeispiele unter Bezugnahme auf die Zeichnung im Einzelnen erläutert. Es zeigt:
- Fig. 1: eine schematische Darstellung des Ausführungsbeispiels, und
- Fig. 2: ein Diagramm, das die Leitgaskonzentration über der Zeit einer Entnahme- oder Messstelle vor dem Filter und einer Entnahme- oder Messstelle hinter dem Filter bei drei unterschiedlichen Beladungszuständen beispielhaft verdeutlicht.

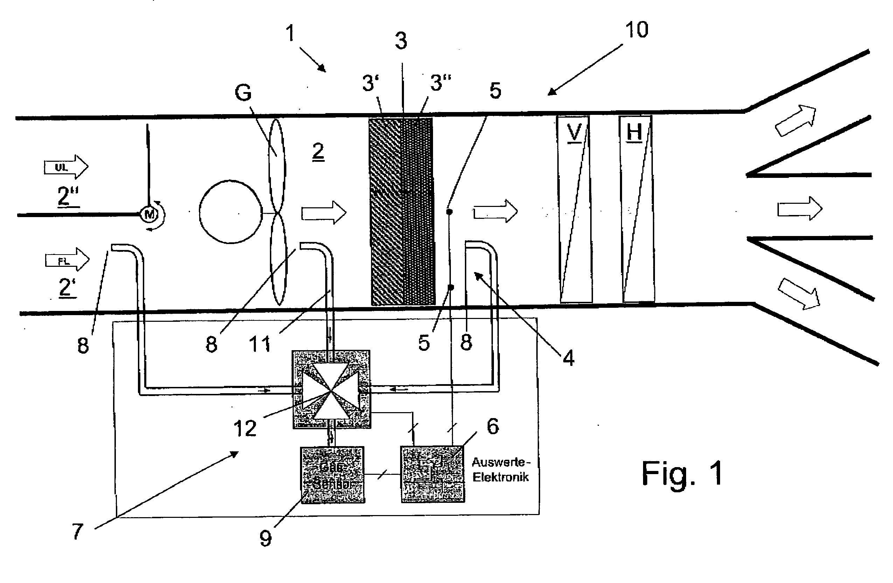

Die Fig. 1 zeigt eine Filteranordnung 1 gemäß dem einzigen Ausführungsbeispiel, die in einem Luftkanal 2 einer ausschnittsweise und stark schematisiert dargestellten Kraftfahrzeug-Klimaanlage angeordnet ist. Hierbei wird durch einen Frischluftkanal 2' Frischluft und/oder einen Umluftkanal 2" Umluft durch ein Gebläse G angesaugt und anschließend durch einen Filter 3, bestehend aus einem Partikelfilter 3' und einem Aktivkohle-Filter 3", den Verdampfer V und gegebenenfalls den Heizkörper H geleitet, bevor die temperierte Luft dem Fahrzeuginnenraum zugeführt wird.

Die Filteranordnung 1 weist den Filter 3, eine erste, physikalische Überwachungseinheit 4 mit vorliegend zwei Messstellen 5 für die Strömungsgeschwindigkeit der Luft nach dem Filter 3, eine Auswerteelektronik 6, eine zweite, chemische Überwachungseinheit 7 mit drei Entnahme- oder Messstellen 8 und einem Gas-Sensor 9 auf. Die Auswerteelektronik 6 dient vorliegend sowohl zur Auswertung der Messwerte der ersten, physikalischen Überwachungseinheit 4, d.h. den Strömungsgeschwindigkeit der Luft an den Messstellen 5, als auch der zweiten, chemischen Überwachungseinheit 7, d.h. der Leitwertkonzentration an den Entnahme- oder Messstellen 8. Hierbei bilden die erste, physikalische Überwachungseinheit 4 und die zweite, chemische Überwachungseinheit 7 samt Auswerteelektronik 6 gemeinsam eine erfindungsgemäße Vorrichtung 10 zur Überwachung des Filters 3.

Die Messstellen 5 zur Überwachung der Strömungsgeschwindigkeit der Luft sind nach dem Filter 3 im Luftkanal 2 angeordnet. Vorliegend ist eine Messstelle 5 etwa mittig im Luftkanal 2 und die andere Messstelle 5 nach außen versetzt, vorliegend in einem Bereich des Strömungskanals zwischen Filter 3 und Verdampfer V, angeordnet. Die an den Messstellen 5 vorgesehenen Sensoren zur Ermittlung der Strömungsgeschwindigkeit der Luft sind mit der Auswerteelektronik 6 verbunden, welche die Messwerte auswertet. Da die Beladung des Partikelfilters 3" in der Regel ungleichmäßig über die Querschnittsfläche erfolgt, sind divergierende Strömungsgeschwindigkeiten der Luft bei Langzeitmessungen ein Maßstab für die Partikelfilter-Beladung. Da hierbei nur die Differenz der Messwerte relevant ist, ist die Anforderung an die Messgenauigkeit der einzelnen Sensoren relativ gering, von Vorteil ist aber eine ähnliche Toleranzabweichung der Sensoren, was beispielsweise durch die Wahl zweier Sensoren aus der gleichen Charge oder durch entsprechende Auswahl erfolgen kann.

Alternativ zu den feststehenden Sensoren kann auch ein einziger, verschiebbar ausgebildeter Sensor vorgesehen sein, welcher regelmäßig zwischen den beiden Messstellen verschoben wird, so dass entsprechende Messwerte ermittelt und verglichen werden können.

Je nach Ausgestaltung kann bei einer hohen Beladung des Partikelfilters 3" nur dieser oder der gesamte Filter 3 ausgetauscht werden.

Die Eritnahme- oder Messstellen 8 der zweiten, chemischen Überwachungseinheit 7 sind im Endbereich des Frischluftkanals 2', im Luftkanal 2 nach dem Gebläse G und nach dem Filter 3 angeordnet, wobei es sich bei den Entnahme- oder Messstellen 8 um Entnahmestellen handelt, von denen aus über Leitungen 11 ein Teil der Luft zu einer Messkammer 12 geführt werden kann, in der die Leitgas-Konzentration mit Hilfe des Gas-Sensors 9 gemessen und der Messwert mit Hilfe der Auswerteelektronik 6 unter Vergleich mit einer Mehrzahl anderer Messwerte, insbesondere den Messwerten an den anderen Messstellen 8, ausgewertet wird. Die Messungen erfolgen vorliegend in regelmäßigen Abständen und abwechselnd an den einzelnen Entnahme- oder Messstellen 8.

Bei dem Gas-Sensor 9 handelt es sich gemäß dem Ausführungsbeispiel um einen Kohlenwasserstoff-Sensor, welcher den Kohlenwasserstoff-Gehalt des Luftstroms misst. Die Konzentrationen des Kohlenwasserstoff-Gehalts an den Entnahme- oder Messstellen 8 werden mittels der Auswerteelektronik 6 verglichen. Wenn die Differenz der Konzentrationen einen Grenzwert überschreitet, wird ein Signal zum Filtertausch gegeben, was beispielsweise mittels einer Kontrolllampe am Armaturenbrett des Kraftfahrzeugs erfolgen kann. Je nach Ausgestaltung kann bei einer hohen Beladung des AktivkohleFilters 3" nur dieser oder der gesamte Filter 3 ausgetauscht. Alternativ können auch andere Leitgase, wie beispielsweise Stickstoffdioxid herangezogen werden. Ein entsprechender Gas-Sensor misst dann den Stickstoffdioxid Gehalt im Luftstrom. Ausdrücklich wird an dieser Stelle erwähnt, dass auch andere Leitgase oder Kombinationen mehrerer Leitgase zur Überwachung verwendet werden können. Der oder die entsprechenden Gas-Sensoren müssen hierzu entsprechend ausgebildet sein.

Als Filter 3 werden gemäß dem Ausführungsbeispiel ein Partikel-Filter 3' und ein Aktivkohle-Filter 3" verwendet, jedoch können auch andere Filter, beispielsweise mit organischen oder anorganischen Sorbentien, verwendet werden.

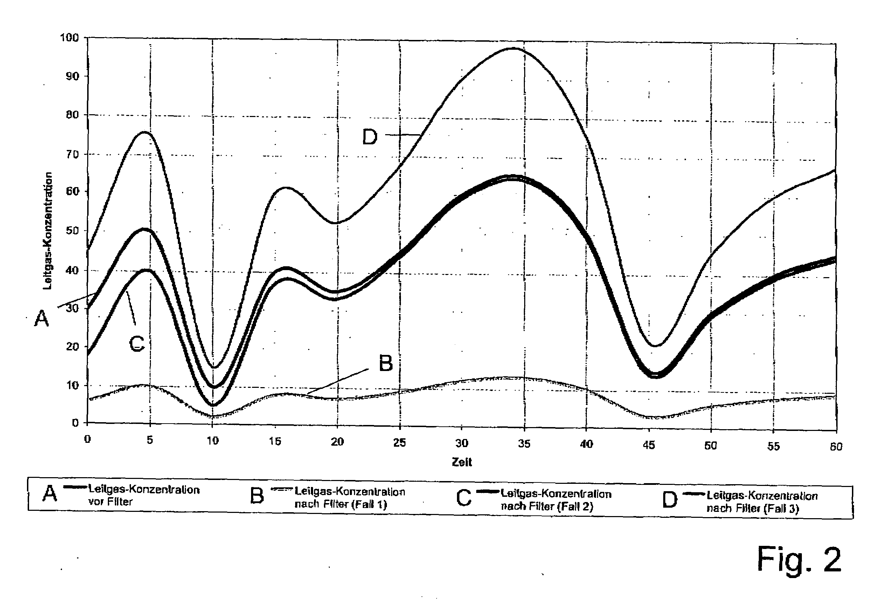

In Fig. 2 ist schematisch ein Diagramm der Leitgas-Konzentrationen vor und nach dem Filter 3 für verschiedene (chemische) Beladungszustände über der Zeit dargestellt. Hierbei zeigt die mit A markierte Kurve die Leitgas-Konzentration vor dem Filter 3, die mit B markierte Kurve die Leitgas-Konzentration nach dem Filter 3 in einem ersten Fall, die mit C markierte Kurve die Leitgas-Konzentration nach dem Filter 3 in einem zweiten Fall und die mit D markierte Kurve die Leitgas-Konzentration nach dem Filter 3 in einem dritten Fall.

Fall 1 (Kurve B) betrifft den Fall eines neuwertigen Filters, d.h. die Leitgas-Konzentration nach dem Filter 3 liegt erheblich unter derjenigen vor dem Filter 3.

Fall 2 (Kurve C) betrifft den Fall eines "vollen" oder beladenen. Filters, d.h. der Leitgas-Konzentrationsverlauf vor und nach dem Filter 3 ist nahezu deckungsgleich über einen längeren Zeitraum hinweg.

Fall 3 (Kurve D) betrifft den Fall, in dem eine höhere Leitgas-Konzentration nach dem Filter 3 als vor dem Filter 3 herrscht, beispielsweise auf Grund der Verdrängung des gebundenen Leitgases aus dem Filter 3 durch eine höher siedende Substanz. Um dies zu Verhindern, sollte als Leitgas stets eine möglichst hoch siedende und schwer vom Filter 3 zu verdrängende Substanz gewählt werden, die außerdem in ausreichender Konzentration in der Luft vorhanden ist. Findet dennoch eine Verdrängung des Leitgases aus dem Filter 3 statt, so kann dies durch die Auswerteelektronik 6 mit Hilfe einer entsprechenden Rechenvorschrift entsprechend bewertet und in der Abschätzung der chemischen Filterbeladung berücksichtigt werden.

Bei der Auswertung müssen neben der möglichen Verdrängung des Leitgases aus dem Filter auch kurzfristige Spitzen der Leitgas-Konzentration, die auf Grund der Fahrzeugdynamik auftreten können, gefiltert werden, so dass die Auswertung in erster Linie auf längerfristigen Messsignalverläufen basiert.

Bei der Auswerteelektronik 6 kann es sich gegebenenfalls auch um eine lernfähige Elektronik handeln, die bei Einbau verschiedene feste und verschiedene abänderbare Grenzwerte vorgegeben hat, und bei der die abänderbaren Grenzwerte über die Zeit optimiert werden, so dass unter Umständen die Zahl oder Frequenz der Messungen verringert werden kann und Voraussagen, wann ein Filter voraussichtlich zu wechseln ist, verbessert werden können.

Die Festlegung von Grenzwerten für die chemische und/oder physikalische Filterbeurteilung kann durch Tests erfolgen.

## Patentansprüche

1. Vorrichtung zur Überwachung eines Filters, die einen in einem Luftkanal (2) angeordneten Filter (3), insbesondere einen Partikelfilter (3') und/oder einen Aktivkohlefilter (3") überwacht, **dadurch gekennzeichnet, dass** die Vorrichtung (10) eine physikalische Überwachungseinheit (4) umfasst, welche die Strömungsgeschwindigkeit der Luft nach dem Filter (3) an mindestens zwei Messstellen (5) ermittelt.

2. Vorrichtung nach Anspruch 1, **dadurch gekennzeichnet, dass** eine erste Messstelle (5) an einer Stelle mit hoher Luftströmungsgeschwindigkeit nach dem Filter (3) angeordnet ist.

3. Vorrichtung nach Anspruch 1 oder 2, **dadurch gekennzeichnet, dass** eine zweite Messstelle (5) an einer Stelle mit geringer Luftströmungsgeschwindigkeit nach dem Filter (3) angeordnet ist.

4. Vorrichtung nach Anspruch 1, **dadurch gekennzeichnet, dass** die physikalische Überwachungseinheit (4) die Strömungsgeschwindigkeit der Luft nach dem Filter (3) im Wesentlichen mittig im Luftkanal (2) und außermittig im Luftkanal (2) ermittelt.

5. Vorrichtung nach einem der vorhergehenden Ansprüche, **dadurch gekennzeichnet, dass** die Messstellen (5) in gleichem Abstand zum Filter (3, 3', 3") angeordnet sind.

6. Vorrichtung nach Anspruch 4, **dadurch gekennzeichnet, dass** die außermittige Messstelle (5) in der Nähe der Wand, jedoch so weit entfernt von der Wand angeordnet ist, dass Reibungseinflüsse der Wand auf den Strömungsverlauf der Luft vemachlässigbar sind.

7. Vorrichtung nach einem der vorhergehenden Ansprüche, **dadurch gekennzeichnet, dass** eine Auswerteelektronik (6) vorgesehen ist, der die Messwerte zugeführt werden.

8. Vorrichtung nach einem der vorhergehenden Ansprüche, **dadurch gekennzeichnet, dass** die Vorrichtung (10) den in dem Luftkanal (2) angeordneten Filter (3) sowie die physikalische Überwachungseinheit (4) und eine chemisch Überwachungseinheit (7), welche mindestens einen Sensor (9) zur Konzentrationsmessung einer Leitsubstanz, sowie mindestens eine Auswerteelektronik (6) für die Überwachungseinheiten (4, 7) aufweist, umfasst.

9. Vorrichtung nach einem der vorhergehenden Ansprüche, **dadurch gekennzeichnet, dass** genau eine Auswerteelektronik (6) für die physikalische Überwachungseinheit (4) und die zweite, chemisch Überwachungseinheit (7) zusammen vorgesehen ist.

10. Vorrichtung nach einem der vorhergehenden Ansprüche, **dadurch gekennzeichnet, dass** der Filter (3) einen Partikelfilter (3') und einen Aktivkohle-Filter (3") aufweist.

11. Belüftungs-, Heizungs- und/oder Klimaanlage für ein Kraftfahrzeug, **dadurch gekennzeichnet, dass** die Belüftungs-, Heizungs- und/oder Klimaanlage eine Vorrichtung nach einem der Ansprüche 1 bis 10 aufweist.

12. Belüftungs-, Heizungs- und/oder Klimaanlage für ein Kraftfahrzeug nach Anspruch 11, **dadurch gekennzeichnet, dass** die Belüftungs-, Heizungs- und/oder Klimaanlage zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

13. Verfahren zur Überwachung eines Filters (3) mit einer Vorrichtung nach einem der Ansprüche 1 bis 10, wobei die Messwerte der Strömungsgeschwindigkeit der Luft an den Messstellen (5) nach dem Filter (3) mit hoher Luftströmungsgeschwindigkeit und geringer Luftströmungsgeschwindigkeit miteinander verglichen werden und die Veränderung der Differenz über die Zeit hinweg überwacht wird.

14. Verfahren zur Überwachung eines Filters (3) mit einer Vorrichtung nach einem der Ansprüche 1 bis 10, wobei die Messwerte der Strömungsgeschwindigkeit der Luft an den Messstellen (5) nach dem Filter (3) mittig im Luftkanal (2) und außermittig im Luftkanal (2) miteinander verglichen werden und die Veränderung der Differenz über die Zeit hinweg überwacht wird.

15. Verfahren nach Anspruch 13 oder 14, **dadurch gekennzeichnet, dass** die Vorrichtung (10) ein Wamsignal bei Überschreiten eines Grenzwertes gibt.
